# EUROPEAN PATENT APPLICATION

(11) **EP 1 437 654 A2**
(43) Date of publication of application: **14.07.2004**
(21) Application number: 03022642.7
(22) Date of filing: 06.10.2003
(51) Int. Cl.: G06F 9/46, G06F 9/45

(54) **Distribution of operations to remote computers**

(30) Priority: 25.10.2002 US 280710
(71) Applicant: Mentor Graphics Corporation, Wilsonville, OR 97070-7777 (US)
(72) Inventor: Todd, Robert A., Tualatin Oregon 97062 (US); Grodd, Laurence W., Portland, OR 97214 (US); Cobb, Nicolas B., San Jose, CA 95131 (US)
(74) Representative: Patentanwälte Leinweber & Zimmermann

(57) **Abstract**

A method and tool are disclosed for distributing operations in a software application from a master computer to one or more slave computers for execution. Operations within the software application are identified that employ input data independent of other input data. The identified operations, which can be organized into groups of one or more operations, may then be distributed to a slave computer for execution. A group of operations may also include one or more heuristics, for determining when the group of operations should be executed on a slave computer. If a group of operations is distributed to a slave computer for execution, the master computer subsequently determines if the slave computer successfully executed those operations. If the slave computer successfully executed the group of operations, it returns the resuits to the master computer, which then employs the returned results to continue running the software application. If, however, the slave computer was unable to successfully execute the group of operations, then the master computer may execute the group of operations itself or provide the group of operations to another slave computer, allowing the master computer to continue running the software application without interruption.

## Description

### Field of the Invention

The present invention is directed to the distribution of operations from a host computer to one or more remote computers. Various aspects of the invention have a particular application to the distribution of software operations from a multi-processor, multi-threaded host computer to one or more single-processor or multi-processor remote computers.

### Background of the Invention

Many software applications can be efficiently run on a single-processor computer. Some software applications, however, have so many operations that they cannot be sequentially executed on a single-processor computer in an economical amount of time. For example, some software applications require the execution of one or more operations on hundred of thousands or even millions of input data values. In order to more efficiently run these types of software applications, computers were developed that employed multiple processors and multiple processing threads. While these computers can execute complex software applications more quickly than single-processor computers, these multi-processor computers are very expensive to purchase and maintain. With multi-processor computers, the processors execute numerous operations concurrently, so they must employ specialized operating systems to coordinate the simultaneous execution of related operations. Further, because its multiple processors may simultaneously seek access to resources such as memory, the bus structure and physical layout of a multi-processor computer is inherently more complex than a single processor computer.

In view of the difficulties and expense involved with large multi-processor computers, networks of linked single-processor computers have become a popular alternative to using a single multi-processor computer. The cost of conventional single-processor computers, such as personal computers, has dropped significantly in the last few years. Moreover, techniques for linking the operation of multiple single-processor computers into a network have become more sophisticated and reliable. Accordingly, multi-million dollar, multi-processor computers are now frequently being replaced with networks or "farms" of relatively simple and low-cost single processor computers.

Shifting from single multi-processor computers to multiple single-processor computers has not been without difficulty, however. With a network of single-processor computers, at least one of the computers (sometimes referred to as a host or master computer) must perform the task of assigning operations to the remaining computers (sometimes referred to as remote or slave computers) in the network. A master computer must also keep track of which slave computers have been assigned which operations, and coordinate the operations results returned by the slave computers. Additionally, if a slave computer fails before returning the results of an assigned operation, the master computer must compensate for the missing results. Configuring a master computer to effectively perform each of these tasks increases the difficulty and expense in using networks of single-processor computers.

Moreover, some types of software applications that have been configured to run on a multi-processor computer cannot easily be reconfigured to run on a network of single-processor computers. For example, hierarchical cell-based software applications cannot easily be converted to run on an array of single-processor computers. With a hierarchical cell-based software application, the operations employ input data that is organized into groups or "cells" of related values. Further, the relationship between the cells is hierarchical. Thus, some of the values of a first cell at one level in the hierarchy may depend upon the output data produced by executing an operation on some of the values of a second cell at a lower level in the hierarchy. Some of the values of that second cell may then depend upon the output data produced from some of the values of a third cell at still a lower level in the hierarchy.

Accordingly, it may be impossible to execute an operation on a cell until other operations have been executed on all of its related cells, making coordination between multiple single-processor computers difficult. Moreover, because the cells are interrelated, they are typically maintained together in a large database that is accessible to each operation that may employ any of the cells. With a conventional network of single-processor computers, however, each computer will typically have only a very small memory that cannot store such a database. Also, transferring such a database to each single-processor computer in a network may create an unacceptable level of overhead for the network.

It thus would be desirable to be able to efficiently distribute various operations of a complex software application from a host (or "master") computer to multiple single-processor or multi-processor remote (or "slave") computers in a network. Moreover, it would be desirable to be able to distribute the operations so that the failure of one or more of the remote computers would not jeopardize the execution of the entire software application.

### Summary of the Invention

Advantageously, various aspects of the invention provide a tool and method for efficiently distributing operations in a software application among a plurality of computers. Embodiments of both the tool and the method have particular application to distributing various operations of a hierarchical cell-based software application from a multi-processor computer to one or more single-processor computers in a network.

According to various embodiments of the invention, independent operations are identified within a software application. Independent operations are operations that only employ input data that is independent of other input data. For example, with embodiments of the invention implemented by a software application employing hierarchical cell-based input data stored in a database, the software application may identify one or more "flat" operations within the software application. That is, the software application may identify operations using input data values from a cell that do not need to be obtained by executing an operation on data values of another cell. With some these embodiments, these "flat" operations (or other types of independent operations) are collected into groups of related operations, sometimes referred to below as flexible operation groups.

With some embodiments of the invention, a flexible operation group may also include one or more heuristics. A flexible operation group's heuristics determine when the flexible operation group can be efficiently executed on a remote slave computer. The heuristics may take into account a number of criteria including, for example, the amount or type of input data for the flexible operation group and the status of the communication interface between the master computer and the slave computer on which the flexible operation group would be executed.

When the software application is run on the master computer, each flexible operation group is identified. When a flexible operation group is scheduled to be executed, the master computer first executes its associated heuristic or heuristics, to determine if the flexible operation groups may be executed on a slave computer. If the heuristics indicate that the operations may be executed on a slave computer and a slave computer has resources available before the master computer to execute the operations, then the flexible operation group is provided to the slave computer, along with the associated input data. The slave computer then executes the flexible operation group. If the slave computer successfully executes the flexible operation group, it returns the results to the master computer which employs the returned results to continue running the software application. If, however, the slave computer cannot successfully execute the flexible operation group, then the master computer can simply execute the flexible operation group itself when resources become available, in order to continue running the software application without interruption.

These and other features and aspects of the invention will be apparent upon consideration of the following detailed description.

### Brief Description of the Drawings

Figure 1 is a schematic diagram of a multi-processor computer linked with a network of single-processor computers as may be employed by various embodiments of the invention.

Figure 2 illustrates the components of a hierarchical cell-based software application for simulating and confirming the accuracy of a photolithographic layout according to some embodiments of the invention.

Figure 3 schematically illustrates the hierarchical arrangement of the various cells employed by the hierarchical cell-based software application illustrated in Figure 2.

Figure 4A schematically illustrates the arrangement and execution of operations of a software application using a single thread.

Figure 4B schematically illustrates the arrangement and execution of operations of a software application using multiple threads according to various embodiments of the invention.

Figure 5 illustrates an operation distribution tool according to an embodiment of the invention.

Figures 6A-6C illustrate a method for distributing a group of one or more operations from a multi-processor computer to a remote computer according to various embodiments of the invention.

### Detailed Description of Preferred Embodiments

### Introduction

Various embodiments of the invention relate to a tool and method for distributing operations from a master computer to one more remote slave computers for execution. As noted above, aspects of some embodiments of the invention have particular application to the distribution of operations of a hierarchical, cell-based software application from a multi-processor master computer to one or more single-processor slave computers. Accordingly, to better facilitate an understanding of the invention, an exemplary network having a multi-processor master computer linked to a plurality of single-processor slave computers will be discussed, together with an exemplary hierarchical cell-based software application implementing an embodiment of the invention. The arrangement of a flexible operation group according to an embodiment of the invention will then be described, together with a tool for distributing operations and a method for distributing operations.

### Exemplary Operating Environment

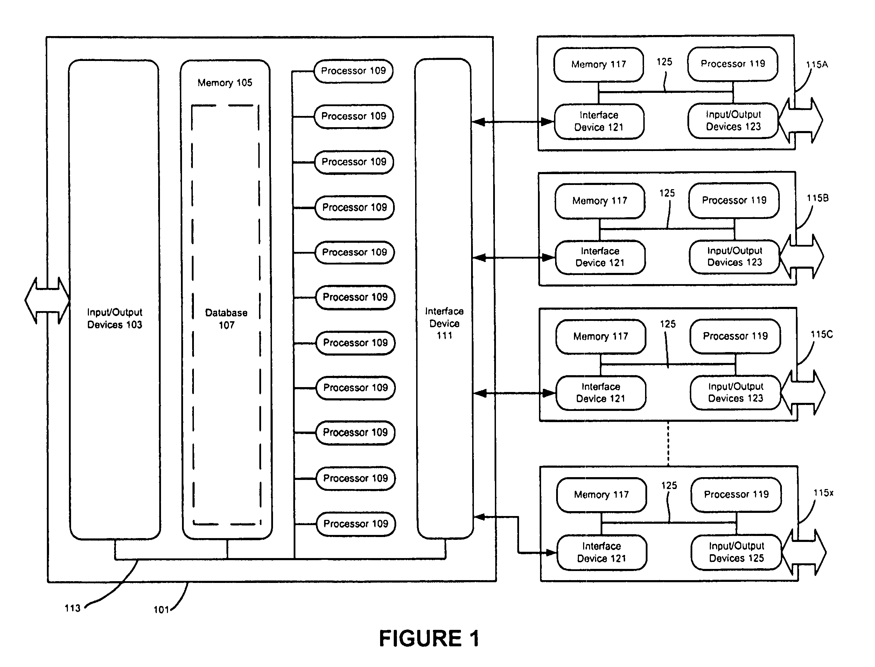

As will be appreciated by those of ordinary skill in the art, a software operation distribution technique according to various embodiments of the invention may be implemented using computer-executable instructions, such as software program modules, executed by a programmable computing device. Because the invention may be implemented using software, the components and operation of a typical programmable computer system on which various embodiments of the invention may be employed will first be described. More particularly, the components and operation of a computer network having a host or master computer and one or more remote or slave computers will be described with reference to Figure 1. This operating environment is only one example of a suitable operating environment, however, and is not intended to suggest any limitation as to the scope of use or functionality of the invention.

In Figure 1, the master computer 101 is a multi-processor computer that includes a plurality of input and output devices 103 and a memory 105. The input and output devices 103 may include any device for receiving input data from or providing output data to a user. The input devices may include, for example, a keyboard, microphone, scanner or pointing device for receiving input from a user. The output devices may then include a display monitor, speaker, printer or tactile feedback device. These devices and their connections are well known in the art, and thus will not be discussed at length here.

The memory 105 may similarly be implemented using any combination of computer readable media that can be accessed by the master computer 101. The computer readable media may include, for example, microcircuit memory devices such as read-write memory (RAM), read-only memory (ROM), electronically erasable and programmable read-only memory (EEPROM) or flash memory microcircuit devices, CD-ROM disks, digital video disks (DVD) or other optical storage devices. The computer readable media may also include magnetic cassettes, magnetic tapes, magnetic disks or other magnetic storage devices, punched media, holographic storage devices, or any other medium that can be used to store desired information.

As will be discussed in detail below, the master computer 101 runs a software application implementing an embodiment of the invention. Accordingly, the memory 105 stores a database 107 containing data to be used with the software application. In the illustrated embodiment, the database 107 is a hierarchical, cell-based database containing input data for executing operations of the software application.

More particularly, with various embodiments of the invention, the database 107 will contain both dependent input data and independent input data. Dependent input data, as used herein, refers to data that has a value dependent upon other contents within the database 107. That is, the value of dependent input data depends upon the value of other data in the database 107. For example, the input data for use by one operation may depend upon output data produced by the execution of another operation. The value of independent data, on the other hand, does not depend upon the value of other data in the database. It should be appreciated, however, that whether data is dependent or independent upon the database will be determined by the selection of the input data. For example, as explained above, first input data for executing a first operation may depend upon the output data produced by executing a second operation with second input data. If taken alone to execute the first operation, the first input data is dependent upon the second input data. If, however, the first input data and the second input data are taken together to execute both the first and second operations, then the first input data and the second input data may together be independent from the database 107.

Referring back now to Figure 1, the master computer 101 also includes a plurality of processors 109 and an interface device 111. The processors 109 may be any type of processing device that can be programmed to execute instructions. The processors 109 may be commercially generic programmable microprocessors, such as Intel® Pentium® or Xeon™ microprocessors, Advanced Micro Devices Athlon™ microprocessors or Motorola 68K/Coldfire® microprocessors. Alternately, the processors 109 may be custom-manufactured processors, such as microprocessors designed to optimally perform specific types of mathematical operations. The interface device 111, the processors 109, the memory 105 and the input/output devices 103 are connected together by a bus 113.

The interface device 111 allows the master computer 101 to communicate with the remote slave computers 115A, 115B, 115C...115x through a communication interface. The communication interface may be any suitable type of interface including, for example, a conventional wired network connection or an optically transmissive wired network connection. The communication interface may also be a wireless connection, such as a wireless optical connection, a radio frequency connection, an infrared connection, or even an acoustic connection. The protocols and implementations of various types of communication interfaces are well known in the art, and thus will not be discussed in detail here.

Each slave computer 115 includes a memory 117, a processor 119, an interface device 121, and one more input/output devices 123 connected together by a system bus 125. As with the master computer 101, the input/output devices 123 for the slave computers 115 may include any conventional input or output devices, such as keyboards, pointing devices, microphones, display monitors, speakers, and printers. Similarly, the processors 119 may be any type of conventional or custom-manufactured programmable processor device, while the memory 117 may be implemented using any conventional memory storage device. Like the interface device 111, the interface devices 121 allow the slave computers 115 to communicate with the master computer 101 over the communication interface.

In the illustrated embodiment, the master computer 101 is a multi-processor computer, while the slave computers 115 are single-processor computers. It should be noted, however, that alternate embodiments of the invention may employ a single-processor master computer. Further, one or more of the remote computers 115 may have multiple processors, depending upon their intended use. Also, while only a single interface device 111 is illustrated for the host computer 101, it should be noted that, with alternate embodiments of the invention, the computer 101 may use two or more different interface devices 111 for communicating with the remote computers 115 over multiple communication interfaces.

### An Exemplary Software Application And Hierarchical Database

As previously noted, the method and tool for distributing operations among one or more remote computers according to embodiments of the invention can be employed with a variety of software applications. Some embodiments of the invention, however, may be particularly useful for software applications configured to run on multi-processor computers (such as master computer 101) and employing a relatively large database, such as some types of software applications used to simulate and verify the structure of an integrated circuit. Examples of such simulation and verification tools are described in U.S. Patent No. 6,230,299 to McSherry et al., issued May 8, 2001, U.S. Patent No. 6,249,903 to McSherry et al., issued June 19, 2001, U.S. Patent No. 6,339,836 to Eisenhofer et al., issued January 15, 2002, U.S. Patent No. 6,397,372 to Bozkus et al., issued May 28, 2002, U.S. Patent No. 6,415,421 to Anderson et al., issued July 2, 2002, and U.S. Patent No. 6,425,113 to Anderson et al., issued July 23, 2002, each of which are incorporated entirely herein by reference.

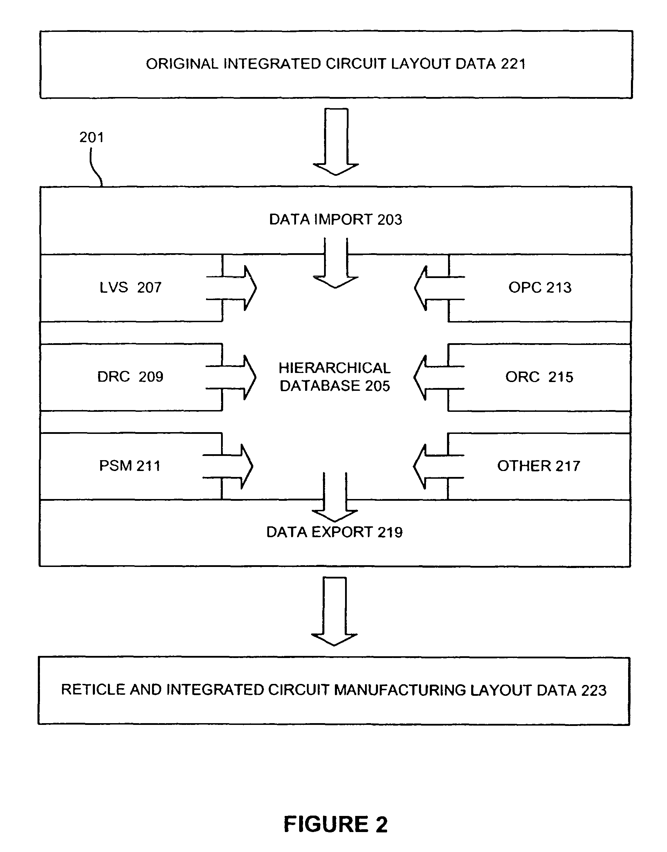

Accordingly, to facilitate an of understanding of these embodiments of the invention, one such type of software application, directed to the simulation and verification of an integrated circuit photolithographic layout, will now be generally described. As seen in Figure 2, the software application, a simulation and verification tool 201, includes a data import module 203 and a hierarchical database 205. The tool 201 also includes a layout-versus-schematic (LVS) verification module 207, a design rule checking (DRC) module 209, a phase shift mask (PSM) module 211, an optical and process correction (OPC) module 213, and an optical and process rule (ORC) checking module 215. The tool 201 may further include other modules 217 for performing additional functions as desired. The tool 201 also has a data export module 219.

Initially, the tool 201 receives the original integrated circuit layout data 221. This layout data 221 describes a photolithographic layout for manufacturing the different structural layers of an integrated circuit device. For example, the original integrated circuit layout data 221 may include a first set of polygons defining a photolithographic mask for creating an isolation region of a transistor, a second set of polygons defining a photolithographic mask for creating a contact electrode for the transistor, and a third set of polygons defining a photolithographic mask for creating an interconnection line to the contact electrode. As will be discussed in more detail below, the original integrated circuit layout data 221 is converted by the data import module 203 into a format that can be more efficiently processed by the remaining components of the tool 201.

Once the data import module 203 has converted the original integrated circuit layout data 221 to the appropriate format, the layout data 221 is stored in the hierarchical database 205 for use by the various operations executed by the modules 205-217. Next, the layout-versus-schematic module 207 checks the converted layout data 221, to confirm that it matches the original design specifications for the desired integrated circuit. Next, the design rule check module 209 confirms that the layout data 221 adheres to predetermined geometric design rules. The converted layout data 221 is then processed by the phase shift module 211, which modifies the layout data 221 to provide for phase shifting where appropriate.

The processed layout data 221 is then passed to the optical and process correction module 213, which corrects for manufacturing distortions that would otherwise occur during the lithographic patterning. For example, the optical and process correction module 213 may correct for image distortions, optical proximity effects, photoresist kinetic effects, and etch loading distortions. The optical and process rule check module 215 then simulates the use of the phase-shifted and corrected layout data 221, to confirm that the corrected data produced by the optical and process correction module 213 will have the desired corrective effect. As previously noted, other modules 217 may be employed to perform further manipulation of the processed and corrected layout data 221, as desired. After all of the desired operations have been performed on the original layout data 221, the data export module 219 converts the processed layout data 221 into reticle and integrated circuit manufacturing layout data 223 (that is, the data export module 219 converts the processed layout data 221 into a format that can be used in a photolithographic manufacturing process).

Running the simulation and verification tool 201 may often require executing operations on a large amount of the input layout data 221. For example, a process that simply computes the area of polygons may operate on more than 50,000 polygons to complete a single task. Accordingly, these types of software applications are typically run on multiprocessor computers, so that the various tasks performed by the application can be broken up and simultaneously executed. As will be appreciated by those of ordinary skill in the art, however, the manufacturing process steps for creating the various layers of an integrated circuit are interrelated. For example, the process steps required to manufacture one layer of an integrated circuit may depend upon the process steps employed to manufacture an underlying layer of the integrated circuit. Thus, in order to simulate and verify the original integrated circuit layout data 221, the data is organized in a hierarchical manner based upon the interrelationships of the corresponding manufacturing processes.

More particularly, the original integrated circuit layout data 221 will be arranged into hierarchical cells in the hierarchical database 205. The hierarchy of the cells may be based upon a variety of different criteria. For example, the hierarchy of the cells may be arranged based upon the stacking order of individual layers in the desired integrated circuit. A portion of the layout data 221 for structures that occur in one layer of the integrated circuit thus may be assigned to a cell in a first hierarchical level. Another portion of the layout data 221 corresponding to structures that occur in a higher layer of the integrated circuit may then be assigned to a cell in a second hierarchical level different from the first hierarchical level.

Alternately, the hierarchy of the layout data 221 may be based upon the combination of individual structures to form larger structures. For example, a portion of the layout data 221 corresponding to an electrode contact may be assigned to a cell in a first hierarchical level. Another portion of the layout data 221 corresponding to a NAND gate that includes the electrode contact may then be assigned to a cell in a second hierarchical level higher than the first hierarchical level. Still another portion of the layout data 221 corresponding to a larger circuit structure employing a plurality of the NAND gates might then be assigned to a cell in a third hierarchical level higher than the second hierarchical level.

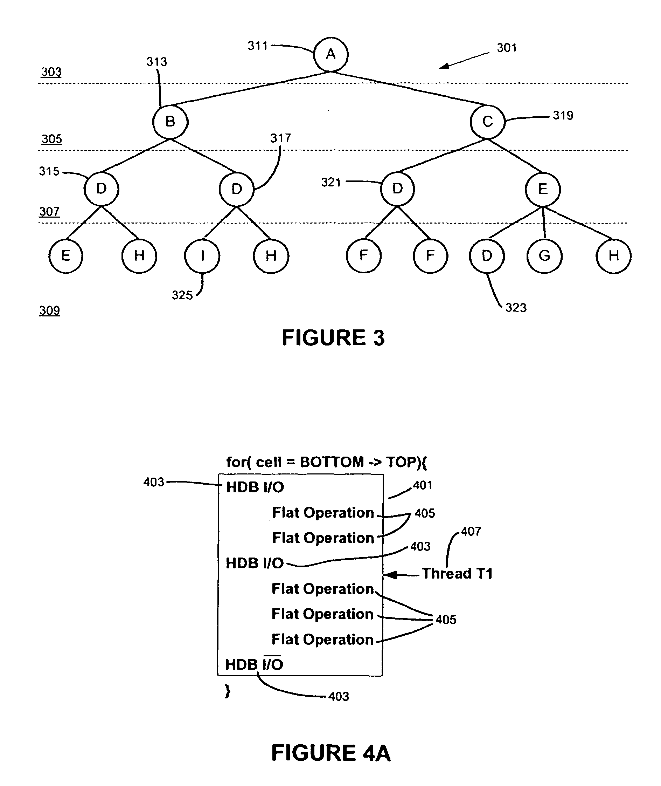

Figure 3 illustrates how various cells may be arranged in a cell-based hierarchical database like the hierarchical database 205. In this example, each cell contains a portion of the hierarchical database, indicated by a letter ranging from "A" to "I." The data 301 in the database is divided into four hierarchical levels 303-309. The highest level 303 contains only a single cell 311, while the second highest level 305 contains two cells 313 and 315. With this arrangement, a process (such as a simulation or verification process) cannot be accurately performed using the input data in the highest level cell 311 until its precedent cells 313 and 315 have been similarly processed. Likewise, the input data in the second level cell 313 cannot be processed until its precedent third-level cells 317 and 319 have been processed. As illustrated in this figure, the same cell may occur in multiple hierarchical levels. For example, the cell 321 is in the third hierarchical level 307 while the cell 323 is in the fourth hierarchical level 309, but both cells 321 and 323 contain the same input data (identified by the letter "D" in the figure). Thus, layout data, such as layout data relating to a specific structure like an electric contact, may be repeatedly used in different hierarchical levels of the database 205.

The hierarchical organization of the layout data 221 may make the simulation and verification software application difficult to run on even a multi-processor computer, such as the multi-processor computer 201. For example, with the hierarchical data 301 illustrated in Figure 3, the cell 313 cannot be concurrently processed with the cell 315. Under some circumstances, however, the cell 325 can be concurrently processed with the cell 315, even though the cells are in different hierarchical levels. Accordingly, the data import module 203 modifies the original integrated circuit layout data 221 to facilitate its processing, as previously noted. More particularly, the data import module 203 rearranges the hierarchical organization of the integrated circuit layout data 221 to optimize the processing of the layout data 221 using multiple processors.

Thus, the restructuring of the layout data 221 imposed by the data import module 203 may improve processing of the layout data 221 on a multi-processor computer, such as the multi-processor computer 101. Even with this modification, however, the interdependencies of the individual cells may still make it difficult to process the layout data 221 using multiple single-processor computers, such as the remote computers 215. Performing a task with one cell may require a processor to access the layout data 221 from numerous other cells contained in the hierarchical database, and in some instances, the necessary values of the layout data 221 may not have been generated. While a multi-processor computer such as the computer 101 may include a large memory that can contain the entire hierarchical database 205 for access by each operation, single processor computers, such as the slave computers 115, typically employ only a relatively small memory 117. The size of the data required from related cells to process a cell may thus be too large to store in the memory of a conventional single-processor computer.

### An Exemplary Flexible Processing Group

Advantageously, various embodiments of the invention identify independent operations in the software application that employ independent input data. For example, with the tool 201 described above, the tool 201 identifies its operations that employ input data that is independent of the hierarchical database 205. More particularly, the tool 201 identifies operations that use input data with values that do not depend upon the value of other layout data in the hierarchical database 205. This type of independent operation is sometimes referred to herein as a "flat" operation, because its input data does not depend upon layout data from the cells of other hierarchical levels. It should be appreciated, however, that there may be alternate or additional types of independent operations that may be identified by various embodiments of the invention. According to some embodiments of the invention, one or more related independent operations may be collected into a group, sometimes referred to herein as a flexible operations group.

Turning now to Figure 4A, this figure illustrates an exemplary portion of a software application for performing a task on a cell in a hierarchical database. The portion 401 includes input/output commands 403 for retrieving input data or providing output data to its associated cell. The portion 401 also includes a plurality of operations 405, which, in the illustrated example, are flat operations. With a conventional multi-processor computer, each of the input/output commands 403 and flat operations 405 would be executed by a single thread 407 using the associated cell.

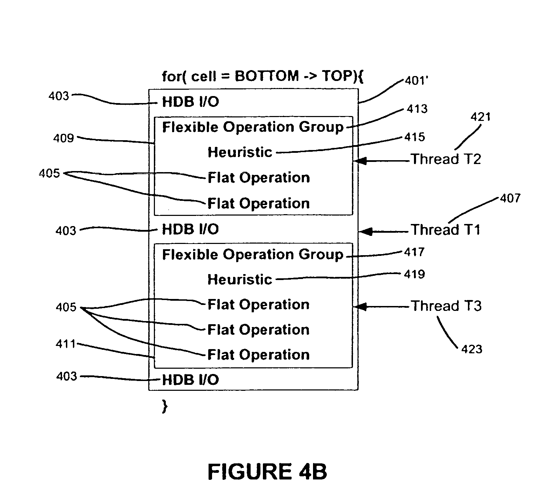

Figure 4B illustrates a portion of a software application according to an embodiment of the invention. The software portion 401' performs the same task as the portion 401 illustrated in Figure 4A, and contains the same input/output commands 403 and flat operations 405. With the illustrated embodiment of the invention, however, the flat operations 405 are organized into flexible operation groups 409 and 411. The flexible operation group 409 includes an identifier 413 identifying the flexible operation group 409 as a collection of related flat operations 405. The flexible operation group 409 also contains a heuristic 415. As will be explained in detail below, the heuristic 415 determines whether the flat operations 405 in the flexible operation group 409 may (or will) be transferred to a slave computer for execution. Similarly, the flexible operation group 411 includes an identifier 417 and a heuristic 419 for determining whether the flat operations 405 in the flexible operation group 411 may (or will) be executed on a master computer or transferred to a slave computer.

Like the software portion 401 illustrated in Figure 4A, the software portion 401' is executed using the first thread 407. The thread 407 initially recognizes the identifier 413 for the flexible operation group 409. When the operations in the flexible operation group 409 are to be executed, the first thread 407 then executes the heuristic 415, to determine whether the flexible operation group may be executed on a slave computer. With most flexible operation groups, it is more efficient to execute the operations on the master computer if resources on the master computer are immediately available. If resources on the master computer are not immediately available, however, then it may be more efficient to execute the flexible operation group on a slave computer. Accordingly, the heuristic 415 determines whether the flat operations of the flexible operation group 409 will be more efficiently executed on a slave computer than waiting for resources to become available on the master computer.

Accordingly, if the heuristic 415 indicates that the flexible operation group 409 may be efficiently executed on a slave computer, and resources for executing the flexible operation group 409 are not available on the master computer but are available on a slave computer, then the first thread 407 passes the flat operations 405 to a second thread 421 operating on that slave computer. Similarly, the thread 407 recognizes the identifier 417 for the flexible operation group 411.and then executes the heuristic 419. If the result of the heuristic 419 indicates that the flat operations 405 of the flexible operation group 411 may be efficiently executed on a slave computer and, and resources to execute the flexible operation group 411 are not available on the master computer but are available on a slave computer, then the first thread passes the flat operations 405 in the flexible operation group 411 to a slave computer for execution by a third thread 423.

It should be noted that, the organization of operations into a flexible operation group as shown in Figure 4B can be implemented in a variety of different types of software applications, including both hierarchical cell-based software applications, like the simulation and verification tool 201 described above, and software applications that do not employ a hierarchical database. Further, execution of software applications incorporating the features of the invention illustrated by the code portion 401' can be implemented on a variety of master-slave computer networks, including a network of the type illustrated in Figure 1.

Different embodiments of the invention may employ a variety of heuristic algorithms to determine whether the flat operations of a flexible operations group may be executed on a on a slave computer. For example, some embodiments of the invention may employ a heuristic that decides whether flat operations may be executed on a slave computer based upon the amount of input data to be processed by the flat operations. This type of heuristic thus may determine that the flat operations may be executed a slave computer if the input data is larger than a preset value. Further, these embodiments may employ heuristics having different preset values for different flexible operation groups. An operation adding the areas of polygons may be efficiently executed on a single-processor slave computer even when the input data includes more than 50,000 polygons. On the other hand, an operation that fractures polygons may be too large to efficiently execute on a single-processor slave computer when the input data is just 2,000 polygons.

Other embodiments of the invention may employ heuristics that determine whether flat operations may be executed on a slave computer based upon the status of the communication interface between the master computer and the slave computer. For example, if the communication interface is operating above a preset data transfer rate, or matches a preset configuration, then the heuristic may determine that its associated flat operations may be executed on the slave computer. With some of these embodiments of the invention, the heuristic may require that the status of the communication interface be manually provided to the processor executing the heuristic. With still other embodiments of the invention, however, the heuristic may automatically determine the status of the communication interface. The heuristic may, for example, send inquiry test messages to the remote computer and time the delay until return messages are received.

Still other embodiments of the invention may employ heuristics that can decide to divide the input data and duplicate the independent operations of a flexible operation group for execution on multiple remote computers. For example, a heuristic may determine that a group of flat operations that adds the area of polygons cannot be efficiently executed on a single slave computer if the input data is more than 100,000 polygons. The heuristic may further determine that the amount of input data should be divided into multiple groups of 30,000 polygons or less, and that a copy of the flat operations should be provided with each portion of the input data to a different slave computer for execution.

Still further, heuristics employed by some embodiments of the invention may definitively determine whether a flexible operation group will be executed on a master computer or on a remote computer, regardless of whether resources are immediately available on the master computer and/or the slave computers. For example, a flexible operation group may include operations that, given a particular set of circumstances, should always be executed on a slave computer rather than on a master computer. These types of heuristic algorithms may employ any combination of criteria, including, but not limited to, those mentioned above. With this type of heuristic, the heuristic may be executed regardless of the resources available on the master computer or the slave computers.

Of course, software applications according to still other embodiments of the invention may employ a combination of different types of heuristics for each flexible operation group as desired. For example, a software application according to some embodiments of the invention may employ a heuristic that accounts only for the amount of input data for its associated flexible operation group or groups. Another flexible operation group in the software application could then include two heuristics in combination, with one heuristic based upon the amount of input data for the flexible operation group and the other heuristic based upon the status of the communication interface with the slave computers. Still another flexible operation group in the application could include a heuristic that allows the input data for the flexible operation group to be divided and the flexible operation group duplicated among multiple slave computers, depending upon the amount of input data and the status of the communication interface with the remote computers.

In addition to employing a variety of heuristics, some software applications according to various embodiments of the invention may include different groupings of independent operations into flexible operation groups. For example, the software application may have a first mode where a set of independent operations is organized into a single flexible operation group, and a second mode where the same set of independent operations is organized into two separate flexible operation groups. When the software application is then compiled into machine instructions for execution, the user may designate which organization of the independent operations should be employed depending upon, for example, the configuration of the communication interface between the host computer and the remote computers.

Similarly, some software application according to various embodiments of the invention may allow a user to employ different modes, depending upon the operating environment available to the user. For example, a software application according to an embodiment of the invention may have a first mode where some operations are designated as independent operations, and a second mode where additional, fewer, or different operations are designated as independent operations. As explained in detail above, the dependency of input data for an operation may be determined by the grouping of the input data, and the determination of which operations are independent operations may thus be conveniently made when a software application is generated. Moreover, the size of a slave computer's available memory available will determine the upper limit on the grouping of input data.

Accordingly, if the software application is to be run on a computer network with slave computers having, for example, large memories and/or multiple processors, then a wide combination of input data can be grouped so as to be independent and a large number of operations thus may be designated independent operations. Alternately, if the software application is to be run on a computer network employing single-processor slave computers with relatively small memories, a smaller variety of input data can be grouped to be independent and fewer operations thus may be designated flat operations. By having multiple modes with different designations of independent operations, a user can select the mode that will be most effectively run on the available master-slave network.

### An Operation Distribution Tool

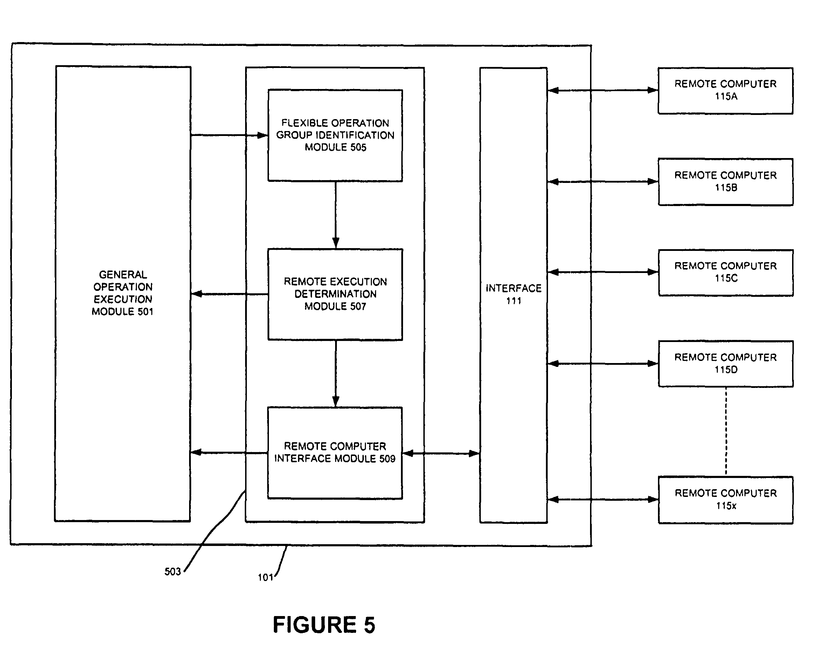

Figure 5 illustrates an operation distribution tool 503 according to an embodiment of the invention for distributing flexible operation groups. As shown in this figure, the tool 503 is implemented to distribute flexible operation groups from the master computer 101 to the slave computers 115 in the network shown in Figure 1. It should be appreciated, however, that alternate embodiments of the distribution tool 503 may be implemented on a variety of master-slave computer networks.

As seen in Figure 5, the operation distribution tool 503 includes a flexible operation group identification module 505, a remote execution determination module 507, and a remote computer interface module 509. In the illustrated embodiment, each of these modules is implemented using a processor 109 executing software instructions. With alternate embodiments of the invention, however, one or more of these modules may be implemented with hardware, firmware, or some combination of software, firmware and hardware.

As will be discussed in detail below, the various operations of the software application initially are executed on the general operation execution module 501. The flexible operation group identification module 505 likewise receives and parses through the operations to be processed by the general operation execution module 501, and identifies each flexible operation group that may be executed on a remote computer 115. After the flexible operation group identification module 505 has identified a flexible operation group, the remote execution determination module 507 determines whether the flexible operation group will be executed on the master computer 101 or on one or more slave computers 115. To determine whether the flexible operation group will be executed on the master computer 101, the remote execution determination module 507 may employ one or more heuristics associated with the flexible operation group, as described in detail above. The remote execution determination module 507 may also take into account the availability of resources on the master computer 101 and/or the availability of resources on the slave computers 115.

If the remote execution determination module 507 determines that the flexible operation group should be executed on the master computer 101, then the remote execution determination module 507 returns control over the flexible operation group to the general operation execution module 501 for execution. On the other hand, if the remote execution determination module 507 determines that the flexible operation group should be executed on one or more slave computers 115, then the remote execution determination module 507 turns control over to the remote computer interface module 509. In response, the remote computer interface module 509 communicates with one more slave computers 115 through the interface device 111, instructing the slave computer 115 to execute the flexible operation group using the appropriate input data.

After instructing the slave computer 115 to execute the flexible operation group, the remote computer interface module 509 waits for the results produced by executing the flexible operation group from the slave computer 115. If the slave computer 115 returns successful results, the remote computer interface module 509 conveys the successful results to the general operation execution module 501, which resumes execution of the software application. If, however, the results obtained from the slave computer 115 indicates that the execution of the flexible operation group was unsuccessful, then the remote computer interface module 509 informs the general operation execution module 501 that the flexible operation group was not successfully executed. With some embodiments of the invention, the general operation execution module 501 may then resume control over the flexible operation group, and execute the flexible operation group itself. Alternate embodiments of the invention, however, may then provide the flexible operation group to another slave computer 115 for execution. In this manner, failure of one of the slave computers 115 will not interrupt the execution of the software application on the master computer 101.

### Method Of Distribution Of Operations

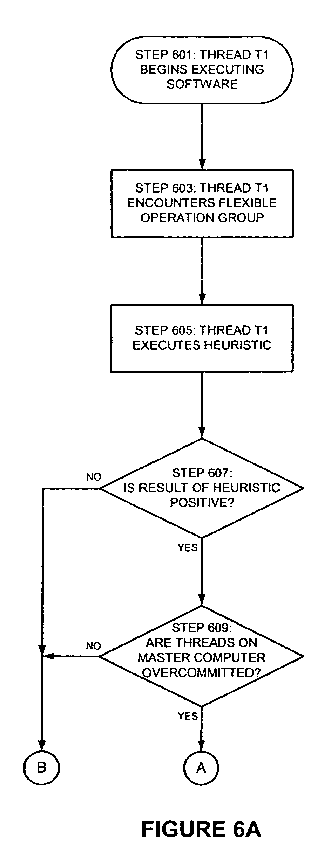

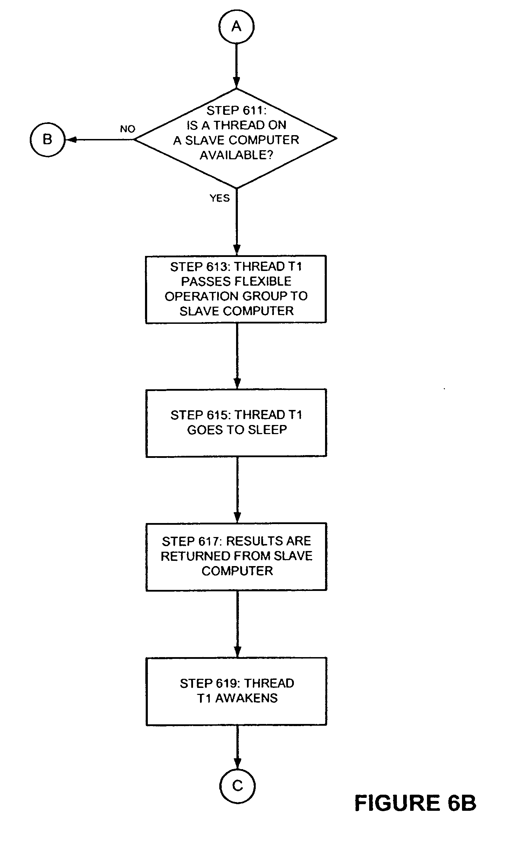

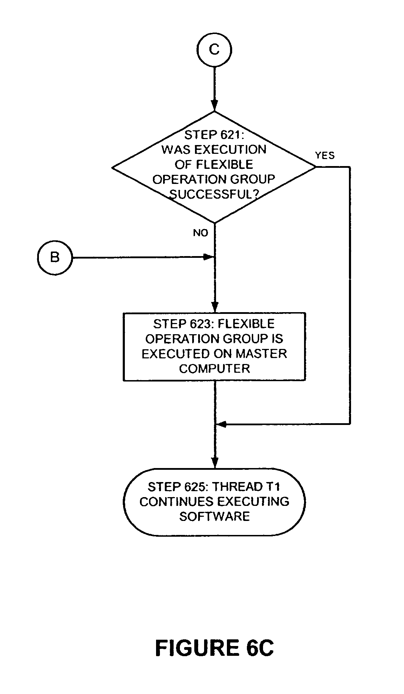

Figures 6A-6C illustrate a method of distributing operations from a master computer to one or more slave computers according to various embodiments of the invention. The illustrated method can be employed, for example, by the operation distribution tool 503 illustrated in Figure 5. Of course, the illustrated method may also be employed with distribution tools according to alternate embodiments of the invention.

Referring now to Figure 6A, a thread T1 receives a plurality of operations making up a software application and, in step 601, begins executing those operations using provided input data. In step 603, the thread T1 encounters a group of operations making up a flexible operation group. As described in detail above, a flexible operation group includes an identifier identifying the operations contained within the flexible operation group having operations employing independent input data. In the illustrated embodiment, the flexible operation group also includes one more heuristics as was described in detail above as well.

Accordingly, in step 605, the first thread T1 executes the heuristic or heuristics associated with the flexible operation group. If the results of executing the heuristic or heuristics are negative (that is, if the heuristic or heuristics indicate that the flexible operation group should not be executed on a slave computer), then, in step 623, the flexible operation group is executed on the master computer 101, either by the thread T1 or by another thread operating on the master computer 101. If, however, the results of executing the heuristic or heuristics are positive (that is, if the heuristic or heuristics indicate that the flexible operation group should be executed on a slave computer), then in step 609 the thread T1 determines if there are any other threads on the master computer 101 that are available to execute the flexible operation group. If another thread on the master computer 101 is available to execute the flexible operation group, then the flexible operation group is executed on the master computer 101 by the available thread in step 623.

If there are no threads available on the master computer 101, then in step 611 the thread T1 determines if a thread is available on a slave computer 115. Again, if there are no threads available on any of the slave computers 115, then the flexible operation group is executed on the master computer 101 in step 623 when a thread becomes available on the master computer. If, however, a thread is available on a slave computer 115, then in step 613 the thread T1 passes the flexible operation group to the slave computer 115 for execution. The thread T1 then goes to sleep in step 615 until the results from executing the flexible operation group are returned from the slave computer 115 in step 617. In response, the thread T1 awakens in step 619, and in step 621 determines if the execution of the flexible operation group on the slave computer 115 was successful. For example, if the master computer 101 employs socket protocols to communicate with the slave computer 115, then the socket will return an error message to the slave computer 115. Thus, if the thread T1 receives an error message rather than output data from executing the flexible operation group, it will conclude that the execution of the flexible operation group on the slave computer 115 was unsuccessful.

If the execution of the flexible operation group on the slave computer 115 was unsuccessful, then in step 623 the flexible operation group is executed on the master computer 101, either by the thread T1 or by another thread. Once the master computer 101 has successfully executed the flexible operation group, then in step 625 the thread T1 continues executing the remaining operations of the software application. If, on the other hand, the slave computer 115 successfully executed the flexible operation group, then the results of that execution are provided to the thread T1, and the thread T1 continues to execute the remaining operations of the software application in step 625.

### Conclusion

Thus, the methods and tools for distributing operations described above provide reliable and efficient techniques for distributing operations from a master computer to one or more slave computers. It should be appreciated, however, that various embodiments of the invention may omit one or more steps of the above-described methods. For example, with some embodiments of the invention, a flexible operation group may not include a heuristic. Alternately, some embodiments of the invention may omit considering whether there are resources available on the master computer, on the slave computers, or both. Still further, some embodiments of the invention may employ a heuristic that definitively determines whether or not the flexible operation group will be executed on the master computer or on a slave computer, regardless of the resources available on either the master computer or on the slave computers. Still further, alternate embodiments of the invention may rearrange the steps of the method described above. For example, the first thread may determine the resources available on the master computer and/or the slave computers before executing a heuristic.

Still other variations regarding the implementation of the invention will be apparent to those of ordinary skill in the art. For example, the operating environment illustrated in Figure 1 connects a single master computer 101 to the slave computers 115 using a 1-to-N type communication interface. Alternate embodiments of the invention, however, may employ multiple master computers 101 to distribute operations to the slave computers 115. Further, the communication interface may be a bus-type interface that allows one slave computer 115 to redistribute operations to another slave computer 115. More particularly, one or more slave computers 115 may include the control functionality to execute embodiments of the invention to redistribute operations to one or more other slave operations. Thus, if the master computer 101 distributes multiple operations to a slave computer 115 that can be broken up into smaller flexible operation groups, the slave computer 115 may then assign a portion of the operations to another slave computer 115 for execution. Additionally, various embodiments of the invention may employ multiple tiers of master/slave computers, such that a computer in one tier distributes operations to one or more computers in a second tier, which may then each distribute the operations among computers in a third tier. These and other variations will be apparent to those of ordinary skill in the art.

Thus, the present invention has been described in terms of preferred and exemplary embodiments thereof. Numerous other embodiments, modifications and variations within the scope and spirit of the appended claims will occur to persons of ordinary skill in the art from a review of this disclosure.

## Claims

1. A method for distributing operations among a plurality of processing threads, comprising:
receiving a plurality of operations for execution on a first thread using input data obtained from a database;
identifying one or more independent operations from among the plurality of received operations, such that the one or more independent operations are for execution using input data independent of the database;
providing at least one of the one or more independent operations to a second thread for execution; and
receiving results of the execution of the at least one independent operation from the second thread.

2. The method for distributing operations recited in claim 1, further comprising:
providing at least another of the one or more independent operations to a third thread for execution; and
receiving results of the execution of the at least another independent operation from the third thread.

3. The method for distributing operations recited in claim 1, further comprising:
if the received results of the execution of the at least one independent operation indicate that the execution of the at least one independent operation was successful, saving the received results; and
if the received results of the execution of the at least one independent operation indicate that the execution of the at least one independent operation was unsuccessful,
reexecuting the at least one independent operation on the first thread or on a third thread, and
receiving results of the reexecution of the at least one independent operation from the first thread or the third thread.

4. The method for distributing operations recited in claim 1, wherein the first thread is running on a first computer, and the second thread is running on a second computer remote from the first computer.

5. The method for distributing operations recited in claim 1, wherein the first computer is a multi-processor computer and the second computer is a single processor computer or multi-processor computer.

6. The method for distributing operations recited in claim 1, wherein the input data from the database is organized into hierarchical cells, such that results obtained by execution of operations using input data of a cell of a first hierarchical level are provided to the database and employed as input data of a cell of a second hierarchical level above the first hierarchical level.

7. A method of distributing operations among a plurality of computers, comprising:
receiving a plurality of operations for execution on a first computer using input data obtained from a database;
identifying one or more independent operations from among the plurality of received operations, such that the one or more independent operations are for execution using input data independent of the database;
determining whether at least one of the one or more independent operations should be executed on a second computer remote from the first computer, and
if it is determined that the at least one independent operation should be executed on the second computer,
providing the at least one independent operation to the second computer for execution, and
receiving results of the execution of the at least one independent operation from the second computer; and
if it is determined that the at least one independent operation should not be executed on a second computer, executing the at least one independent operation on the first computer.

8. The method for distributing operations recited in claim 7, wherein determining whether at least one of the one or more independent operations should be executed on a second computer includes executing a heuristic associated with the at least one independent operation.

9. The method for distributing operations recited in claim 8, wherein the heuristic determines whether the at least one independent operation may be executed on the second computer based upon the amount of independent input data to be used in executing the at least one independent operation.

10. The method for distributing operations recited in claim 9, wherein the heuristic determines whether the at least one independent operation may be executed on the second computer based upon a status of a communication interface between the first computer and the second computer.

11. The method for distributing operations recited in claim 10, wherein the heuristic further determines the status of the communication interface between the first computer and the second computer.

12. The method for distributing operations recited in claim 8, wherein the heuristic determines whether the at least one independent operation may be executed on the second computer based upon a status of a communication interface between the first computer and the second computer.

13. The method for distributing operations recited in claim 12, wherein the heuristic further determines the status of the communication interface between the first computer and the second computer.

14. The method for distributing operations recited in claim 8, wherein:
the heuristic determines whether the at least one independent operation will be executed on the second computer using only a first portion of independent input data to be used in executing the at least one independent operation; and
if the heuristic determines that the at least one independent operation will be executed on the second computer using only a first portion of the independent input data to be used in executing the at least one independent operation, the heuristic
provides the at least one independent operation to the second computer with the first portion of the independent input data to be used in executing the at least one independent operation, and
provides the at least one independent operation to a third computer with a second portion of the independent input data to be used in executing the at least one independent operation.

15. The method for distributing operations recited in claim 7, wherein:
the first computer employs multiple processing threads and multiple processors, and
determining whether at least one of the one or more independent operations should be executed on a second computer includes
determining if a processing thread is available on the first computer for executing the at least one independent operation, and
if a processing thread is available on the first computer for executing the at least one independent operation, determining that the at least one independent operation should be executed by the available processing thread on the first computer.

16. The method for distributing operations recited in claim 7, wherein determining whether at least one of the one or more independent operations should be executed on a second computer includes:
determining if a processing thread is available on the second computer for executing the at least one independent operation, and
if a processing thread is available on the second computer for executing the at least one independent operation, determining that the at least one independent operation should be executed by the available processing thread on the second computer.

17. The method for distributing operations recited in claim 7, further comprising:
determining whether at least another of the one or more independent operations should be executed on a third computer; and
if it is determined that the at least another independent operation should be executed on a third computer,
providing the at least another independent operation to the third computer for execution, and
receiving results of the execution of the at least another independent operation from the third computer; and
if it is determined that the at least another independent operation should not be executed on the third computer, executing the at least another independent operation on the first computer.

18. The method for distributing operations recited in claim 7, further comprising:
if the received results of the execution of the at least one independent operation indicate that the execution of the at least one independent operation was successful, saving the received results; and
if the received results of the execution of the at least one independent operation indicate that the execution of the at least one independent operation was unsuccessful, reexecuting the at least one independent operation.

19. The method for distributing operations recited in claim 18, further comprising reexecuting the at least one independent operation on the first computer.

20. The method for distributing operations recited in claim 18, further comprising reexecuting the at least one independent operation on a third computer.

21. The method for distributing operations recited in claim 7, wherein the input data from the database is organized into hierarchical cells, such that results obtained by execution of operations using input data of a cell of a first hierarchical level are provided to the database and employed as input data of a cell of a second hierarchical level above the first hierarchical level.

22. A tool for distributing operations among a plurality of computers, comprising:
an identification module that:
parses through a plurality of operations for execution on a master computer using input data obtained from a database, and
identifies one or more independent operations that use input data independent of the database from among the plurality of received operations;
a remote execution determination module that determines whether each identified independent operation should be executed on a slave computer or executed on the master computer; and
a remote computer interface module that:
transmits independent operations from the master computer to one or more slave computers for execution, and
receives results of execution of the transmitted independent operations from the one or more slave computers.

23. The tool recited in claim 22, wherein the remote execution determination module is configured to employ a heuristic associated with each independent operation to determine whether the independent operation should be executed on a slave computer.

24. The tool recited in claim 23, wherein the remote execution determination module is configured to employ a heuristic that determines whether a independent operation may be executed on a slave computer based upon the amount of independent input data to be used in executing the independent operation.

25. The tool recited in claim 24, wherein the remote execution determination module is configured to employ a heuristic that further determines whether a independent operation may be executed on a slave computer based upon a status of a communication interface between the master computer and the slave computer.

26. The tool recited in claim 25, wherein the remote execution determination module is configured to further determine the status of the communication interface between the master computer and the slave computer.

27. The tool recited in claim 23, wherein remote execution module is configured to employ a heuristic that determines whether a independent operation may be executed on a slave computer based upon a status of a communication interface between the master computer and the slave computer.

28. The tool recited in claim 27, wherein the remote execution determination module is configured to further determine the status of the communication interface between the master computer and the slave computer.

29. The tool recited in claim 22, wherein:
the remote execution determination module is configured to employ a heuristic that determines whether a independent operation will be more efficiently executed on a slave computer using only a portion of independent input data to be used in executing the independent operation; and
if the remote execution determination module determines that the independent operation will be more efficiently executed on the slave computer using only a portion of the independent input data to be used in executing the independent operation, then the remote computer interface module
provides the independent operation to a first slave computer with a first portion of the independent input data to be used in executing the independent operation, and
provides the at independent operation to a second slave computer with a second portion of the independent input data to be used in executing the at least one independent operation.

30. The tool recited in claim 22, wherein:
the master computer employs multiple processing threads with multiple processors; and
the remote execution determination module is configured to:
determine if a processing thread is available on the master computer for executing the independent operation, and
if a thread is available on the master computer for executing the independent operation, determine that the independent operation should be executed by the available thread on the master computer.

31. The tool recited in claim 22, wherein the remote execution determination module is configured to:
determine if a processing thread is available on a slave computer for executing the at least one independent operation; and
if a thread is available on a slave computer for executing the independent operation, determine that the independent operation should be executed by the available thread on the slave computer.

32. The tool recited in claim 22, wherein the remote computer interface module is configured to:
save received results of the execution of a independent operation that indicate that the execution of the independent operation was successful, and
have the independent operation reexecuted when the received results of the execution of a independent operation indicate that the execution of the independent operation was unsuccessful.

33. The tool recited in claim 32, wherein the remote computer interface module is configured to have the independent operation reexecuted on the master computer.

34. The tool recited in claim 32, wherein the remote computer interface module is configured to have the independent operation reexecuted on a second slave computer.

35. A computer-readable medium having stored thereon a data structure, comprising:
a plurality of operations for execution on a host computer; and
an identifier identifying a group of the operations as operations that may alternately be executed on a slave computer.

36. The computer-readable medium recited in claim 35,wherein the data structure further comprises a heuristic for the group of operations that, when executed, determines whether the associated group of operations may be executed on a slave computer.

37. The computer-readable medium recited in claim 36, wherein the heuristic determines whether the group of operations may be executed on a slave computer based upon the amount of independent input data to be used in executing the group of operations.

38. The computer-readable medium recited in claim 37, wherein the heuristic further determines whether the group of operations may be executed on a slave computer based upon a status of a communication interface between the master computer and the slave computer.

39. The computer-readable medium recited in claim 38, wherein the heuristic further determines the status of the communication interface between the master computer and the slave computer.

40. The computer-readable medium recited in claim 36, wherein the heuristic determines whether the group of operations may be executed on a slave computer based upon a status of a communication interface between the master computer and the slave computer.

41. The computer-readable medium recited in claim 40, wherein the heuristic further determines the status of the communication interface between the master computer and the slave computer.

42. The computer-readable medium recited in claim 39, wherein the data structure further comprises a second identifier identifying a second group of the operations as operations that may alternately be executed on a slave computer, such that
the first identifier is employed when a status of communication between the master computer and one or more slave computers is in a first state, and
the second identifier is employed when a status of communication between the master computer and one or more slave computers is in a second state.
